(19) **Europäisches Patentamt**

**European Patent Office**

**Office européen des brevets**

(11) **EP 1 181 326 B1**

(12) **EUROPÄISCHE PATENTSCHRIFT**

(45) Veröffentlichungstag und Bekanntmachung des Hinweises auf die Patenterteilung:
**25.09.2002 Patentblatt 2002/39**

(21) Anmeldenummer: **00940272.8**

(22) Anmeldetag: **25.05.2000**

(51) Int Cl.⁷: **C08G 77/08**, C08L 83/04, C09D 183/04 // C08L83:04, C08L83:04, C09D183:04

(86) Internationale Anmeldenummer:
**PCT/EP00/04789**

(87) Internationale Veröffentlichungsnummer:
**WO 00/075218 (14.12.2000 Gazette 2000/50)**

(54) **POLYORGANOSILOXANHARZE UND VERNETZBARE ZUSAMMENSETZUNGEN ENTHALTEND POLYORGANOSILOXANHARZE**

POLYORGANOSILOXANE RESINS AND CROSS-LINKABLE COMPOSITIONS CONTAINING POLYORGANOSILOXANE RESINS

RESINES DE POLYORGANOSILOXANE ET COMPOSITIONS POLYMERISABLES CONTENANT LESDITES RESINES

(84) Benannte Vertragsstaaten:
**DE**

(30) Priorität: **02.06.1999 DE 19925436**
           **02.03.2000 DE 10010217**

(43) Veröffentlichungstag der Anmeldung:
**27.02.2002 Patentblatt 2002/09**

(73) Patentinhaber: **Wacker-Chemie GmbH**
**81737 München (DE)**

(72) Erfinder:
 • **DAUTH, Jochen**
   **D-84489 Burghausen (DE)**
 • **SCHATTENMANN, Wolfgang**
   **D-84489 Burghausen (DE)**
 • **BAUMANN, Frank**
   **D-84561 Mehring (DE)**
 • **DEUBZER, Bernward**
   **D-84489 Burghausen (DE)**
 • **MINIGSHOFER, Renate**
   **D-84367 Reut (DE)**

(74) Vertreter: **Deffner-Lehner, Maria, Dr.**
   **Wacker-Chemie GmbH,**
   **Zentralabteilung PLM,**
   **Hanns-Seidel-Platz 4**
   **81737 München (DE)**

(56) Entgegenhaltungen:
   **EP-A- 0 195 936        EP-A- 0 535 687**
   **EP-A- 0 718 344**

**Beschreibung**

Die Erfindung betrifft ein Polyorganosiloxanharz auf der Basis von Wasserglas und ein Verfahren zu seiner Herstellung. Weiterhin betrifft die Erfindung vernetzbare Zusammensetzungen enthaltend Polyorganosiloxanharze daraus hergestellte Formkörper und ein Verfahren zur Herstellung von Beschichtungen.

Polyorganosiloxanharze sind z.B. aus der US 2,676,182 bekannt. Zu ihrer Herstellung wird ein Verfahren basierend auf einer sauren katalysierten Kondensation des Alkali-Wasserglases mit einer anschliessenden Silylierung und Kondensation bei erhöhter Temperatur durchgeführt. Die so erhaltenen MQ-Harze sind monomodal und haben eine Molmasse im Bereich von 2000 bis 10000 g/mol, wobei SiOH -Gehalte von bis zu 4 Gew.-% bezogen auf MQ-Harz erhalten werden.

Ein anderes Herstellungsverfahren, das auf der Hydrolyse und Kondensation von Alkoxysilanen beruht, hat den Nachteil, daß die erhaltenen MQ-Harze immer beträchtliche Anteile an Restalkoxygruppen tragen und einen hohen Si-OH Gehalt aufweisen.

Selbst durch aufwendige und teure chemische Nachbehandlungen kann man in beiden Fällen nur unvollständig die Restalkoxy- und Rest SiOH- Gruppen reduzieren.

In EP-B 108 208 (General Electric Company, veröffentlicht am 27.04.88) wird ein gesteuertes Trennadditiv beschrieben enthaltend ein nicht kondensiertes Silicon-MQ-Harz mit $R_3SiO_{1/2}$ und $SiO_{4/2}$- Einheiten, worin R einen einwertigen Kohlenwasserstoffrest mit nicht mehr als 2 Kohlenstoffatomen bedeutet und wobei das nicht kondensierte Silicon-MQ-Harz in einem ungesättigten, nicht flüchtigen, organischen, reaktiven Verdünnungsmittel dispergiert ist.

In EP-A 718 344 (Dow Corning Corporation, veröffentlicht am 26.06.96) wird eine härtbare Siliconzusammensetzung für Beschichtungen beschrieben, die ein kontinuierlich hergestelltes MQ-Harz enthält.

In EP-A 851 001 (Dow Corning Corporation, veröffentlicht am 01.07.98) wird die Zusammensetzung einer abhäsiven Siliconbeschichtung beschrieben, die wasserstofffunktionelle MQ-Harze enthält.

In EP-A 780 454 (Dow Corning Corporation, veröffentlicht am 25.06.97) wird ein gesteuertes Trennadditiv, enthaltend ein MQ-Harz und eine Siliconverbindung mit perfluorierten Alkylresten beschrieben. Die Zusammensetzungen gestatten eine gleichmäßige, niedrige Trennkraft bei Langsamabzug.

In EP-A 652 257 und EP-A 652 258 (Dow Corning Limited, veröffentlicht am 10.05.95) werden gesteuerte Trennadditive, enthaltend ein MQ-Harz mit Wasserstoffatomen und Alkenylgruppen oder Oxyalkenylgruppen der Formeln $-R'-CH=CH_2$ oder $-OR'-CH=CH_2$, wobei R' eine Alkylgruppe mit 4 bis 12 Kohlenstoffatomen ist, beschrieben.

Es bestand die Aufgabe Polyorganosiloxanharze zur Verfügung zu stellen, die einen geringen Si-OH Gehalt und weitgehend frei von Restalkoxygruppen sind.

Ferner bestand die Aufgabe neue vernetzbare Zusammensetzungen enthaltend Polyorganosiloxanharze bereitzustellen, die im Zuge einer Hydrosilylierungsreaktion vernetzen. Weiterhin bestand die Aufgabe neue vernetzbare Zusammensetzungen zur Herstellung von Beschichtungen bereitzustellen. Des weiteren bestand die Aufgabe neue abhäsive Beschichtungszusammensetzungen bereitzustellen, die abriebfeste Überzüge ergeben, d. h. auf dem Untergrund haften, so dass sie durch mechanische Einflüsse, wie z.B. durch Reiben, nicht vom Untergrund getrennt werden können, damit sie beim Abziehen darauf befindlicher, mit Klebstoffen versehener Träger, wie z.B. Etiketten, nicht teilweise abgelöst werden und so die Klebkraft der Etiketten vermindern. Weiterhin bestand die Aufgabe, abhäsive Beschichtungszusammensetzungen bereitzustellen, die mit aggressiven Klebstoffen stabile Trennwerte über lange Zeiträume gewährleisten. Ferner bestand die Aufgabe, abhäsive Beschichtungszusammensetzungen bereitzustellen, die es erlauben, den gewünschten Grad der Abhäsivität einzustellen. Die Aufgabe wird durch die Erfindung gelöst.

Gegenstand der Erfindung sind Polyorganosiloxanharze auf der Basis von Wasserglas, wobei das Polyorganosiloxanharz mit einer Base nachbehandelt ist.

Das erfindungsgemäße Polyorganosiloxanharz kann folgende Einheiten der allgemeinen Formeln (I), (II), (III) und (IV) enthalten.

$$RR^1R^2SiO_{1/2} = M \text{ - Einheit} \tag{I}$$

$$SiO_2 = Q \text{ - Einheit} \tag{II}$$

$$R^3SiO_{3/2} = T \text{ - Einheit} \tag{III}$$

$$R^3_2SiO_{2/2} = D \text{ - Einheit} \tag{IV}$$

wobei,

R ein einwertiger, linearer oder cyclischer Kohlenwasserstoffrest mit 1 bis 18 Kohlenstoffatomen je Rest ist, der gegebenenfalls noch mit Halogenatomen substituiert sein kann, oder dessen Kohlenstoffkette noch durch Heteroatome wie Stickstoff, Sauerstoff oder Schwefel unterbrochen sein kann oder $\overset{\times}{\times}$OR'' bedeutet, wobei R'' einen einwertigen gegebenenfalls substituierten Kohlenwasserstoffrest mit 1 bis 8 Kohlenstoffatom(en) bedeutet.

Beispiele für Reste R sind vorzugsweise Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl- und tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenylrest.

Beispiele für substituierte Reste R sind Cyanalkylreste, wie der β-Cyanethylrest, und halogenierte Kohlenwasserstoffreste, beispielsweise Halogenalkylreste, wie der 3,3,3-Trifluor-npropylrest, der 2,2,2,2',2',2'-Hexafluorisopropylrest, der Heptafluorisopropylrest.

Schon wegen der leichteren Zugänglichkeit ist als Rest R der Methyl- oder Ethylrest bevorzugt.

Bei Rest R'' handelt es sich bevorzugt um Wasserstoffatom und gegebenenfalls substituierte Kohlenwasserstoffreste mit 1 bis 8 Kohlenstoffatom(en), wobei Wasserstoff und Alkylreste mit 1 bis 3 Kohlenstoffatom(en), insbesondere der Methyl-, Ethyl-, und Isopropylrest, besonders bevorzugt sind.

Beispiele für Reste R'' sind die für den Rest R genannten Beispiele mit 1 bis 8 Kohlenstoffatom(en).

$R^1$ kann gleich oder verschieden R sein oder ist ein Wasserstoffatom.

Beispiele für $R^1$ sind die unter R aufgeführten.

$R^2$ kann gleich oder verschieden R bzw. $R^1$ sein oder ist ein einwertiger Kohlenwasserstoffrest mit 1 bis 18 Kohlenstoffatomen je Rest, der zusätzliche funktionelle Gruppen tragen kann.

Beispiele für $R^2$ sind die unter R aufgeführten.

Beispiele für Kohlenwasserstoffreste $R^2$ mit funktionellen Gruppen sind Kohlenwasserstoffreste mit einer vorzugsweise terminalen aliphatischen Kohlenstoff-Kohlenstoff-Mehrfachbindung, wie der Alkenyl- oder Alkinylrest z.B. der Vinylrest oder Ethinylrest, und Kohlenwasserstoffreste, die mit einer Aminogruppe, z.B. dem Aminopropylrest, oder mit einer Mercaptogruppe, z.B. dem Mercaptopropylrest, substituiert sind.

$R^3$ kann gleich R oder $R^1$ oder $R^2$ sein.

Das M : Q - Verhältnis kann dabei vorzugsweise von 0,4 : 1 bis 1,5 : 1, bevorzugt von 0,5 : 1 bis 1 : 1, besonders bevorzugt 0,6 : 1 bis 0,85 : 1. variieren. Neben den M und Q Einheiten können auch noch zusätzlich T Einheiten oder D-Einheiten oder T und D zusammen anwesend sein, wobei der Anteil von D beziehungsweise T Einheiten relativ zu Q-Einheiten maximal 0,5 :1 ist.

Der Anteil von Strukturelementen der allgemeinen Formeln (III) und (IV) kann vorzugsweise von 0 bis 50 mol-%, bevorzugt von 0 bis 25 mol-%, besonders bevorzugt von 0 bis 10 mol-% bezogen auf M - Einheiten betragen.

Das erfindungsgemäße Polyorganosiloxan hat einen Gehalt an Si-gebundenen Hydroxygruppen (= Si-OH-Gehalt) von vorzugsweise kleiner 0,5 Gew.%, bevorzugt kleiner 0,4 Gew.-%, besonders bevorzugt kleiner 0,3 Gew.% und einen Gehalt an Si-gebundenen Alkoxygruppen (= Restalkoxygehalt) von vorzugsweise kleiner 1 Mol%, bevorzugt kleiner 0,7 mol-%, besonders bevorzugt kleiner 0,4 Mol%.

Die erfindungsgemäßen Polyorganosiloxanharze haben vorzugsweise einen Molmassenbereich von 2000 bis 1 000 000 g/mol.

Das Polyorganosiloxanharz wird hergestellt, indem Organosiliciumverbindungen ausgewählt aus der Gruppe der Silane $R'_n Si X_{4-n}$, Siloxane $R'_n SiO_{4-n/2}$ und Mischungen beider verwendet werden, wobei R gleich oder verschieden sein kann und R, $R^1$, $R^2$ oder $R^3$ bedeutet, X ein Halogenatom, wie Chlor oder Brom oder eine Alkoxygruppe bedeutet und n eine ganze Zahl von 1 bis 3 ist. Zumindest 50 % der gesamten Anzahl an R'-Gruppen sind Alkylgruppen. Die hydrolisierbaren Gruppen an den Silanen sind Halogen- oder Alkoxygruppen.

Diese Organosiliciumverbindungen werden mit einem Kieselsäurehydrosol umgesetzt, das einen pH von weniger als 5 aufweist, in einer Menge, die derart ist, daß zumindest 1 Mol Organosilylgruppe pro Mol an $SiO_2$ in dem Kieselsäurehydrosol vorhanden ist. Vorzugsweise beträgt die Menge an Silan, die verwendet wird, zumindest 3 Mol pro Mol an $SiO_2$. Jedoch kann jede Menge an Silan verwendet werden, das über einem 1 zu 1 molarem Verhältnis liegt, ohne daß Beeinträchtigungen auftreten.

Die Silane und Siloxane können allein oder in Mischungen verwendet werden. In den Fällen in denen Chlorsilan verwendet wird, ist es nicht notwendig irgendeine Säure zu der Reaktionsmischung hinzuzufügen, da HCl in situ gebildet wird. In derartigen Fällen kann das Chlorsilan direkt zu der Natriumsilicatlösung hinzugefügt werden. In den Fällen, in denen Alkoxysilane und Siloxane verwendet werden, ist es notwendig, daß das Kieselsäurehydrosol ausreichend Säure enthält, so daß der pH davon geringer als 5 ist. Geeignete Säuren sind Salzsäure, Schwefelsäure, Salpetersäure, Phosphorsäure, Benzolsulphonsäure, Trichloressigsäure und jede andere starke Säure. Jede Menge an Säure über das hinaus, das notwendig ist, um einen pH von weniger als 5 zu erreichen, kann verwendet werden.

Als Organosiliciumverbindungen werden vorzugsweise R'$_3$SiCl, R'$_3$SiOR'' oder (R'$_3$Si)$_2$O entweder allein oder im Gemisch oder zusammen mit begrenzten Mengen an R'$_2$SiX$_2$, R'SiX$_3$, R'$_2$SiO und R'SiO$_{3/2}$ eingesetzt, wobei X, R und R'' die oben dafür angegebene Bedeutung haben. Beispiele für einzelne Verbindungen sind Trimethylchlorsilan, Trimethylethoxysilan, Trimethylisopropoxysilan, Phenyldimethylchlorsilan, Hexamethyldisiloxan, Dimethylsiloxan, Phenyltrichlorsilan, Diethyltetramethyldisiloxan, Tolylmethyldichlorsilan, Methyltriethoxysilan, Stearyltrichlorsilan, Chlorphenyldimethylchlorsilan, Monotolylsiloxan und Trifluortolylmethyldichlorsilan.

Die verwendeten Kieselsäurehydrosole werden auf bekannte Weise hergestellt, indem Natriumsilicatlösungen, die durch Zugabe von Wasser zu Wasserglas erhalten werden und alkalisch reagieren, mit Säure umgesetzt werden. Diese Umsetzung kann entweder mittels einer Säure oder eines Chlorsilans erfolgen. Im letzteren Fall ist es nicht notwendig noch irgend eine zusätzliche Säure zu der Reaktionsmischung hinzuzufügen. Zur Stabilisierung des Kieselsäurehydrosols werden vorzugsweise Alkohole, wie Isopropanol, zugegeben. Kieselsäurehydrosol von jeder Konzentration reagiert unter sauren Bedingungen mit den oben genannten Organosiliciumverbindungen, es ist bevorzugt, daß das Kieselsäurehydrosol eine Konzentration von 1 bis 35 Gew.% an SiO$_2$ hat.

Unter den obigen Bedingungen reagieren die Organosiliciumverbindungen und das SiO$_2$ des Kieselsäurehydrosols, um Copolymere herzustellen, bei denen Organosilylgruppen mit dem Silicium des SiO$_2$ über das Sauerstoffatom verbunden sind.

Dieses Verfahren wird vorzugsweise bei Raumtemperatur oder höheren Temperaturen durchgeführt, wobei die Mischung vorzugsweise gerührt wird.

Nach dem Ende der sauren Kondensation wird bevorzugt organisches, nicht mit Wasser mischbares Lösungsmittel, wie Xylol oder Toluol zugegeben, um das Polyorganosiloxanharz zu extrahieren. Lösungsmittel wird vorzugsweise in Mengen von 40 bis 80 Gew.-%, bezogen auf das Polyorganosiloxanharz, eingesetzt.

Das so hergestellte Polyorganosiloxanharz wird dann einer basischen Nachkondensation unterworfen.

Das erfindungsgemässe Verfahren zeichnet sich durch einen zusätzlichen basischen Kondensationschritt nach der sauren Kondensation aus.

Geeignete basische Katalysatoren hierfür sind vorzugsweise alle Verbindungen, die in Wasser eine pH-Wert Erhöhung über pH 7 bewirken. Beispiele für derartige Verbindungen sind Metalloxide (s. Formel Va) und Hydroxide (s.Formel (Vb)) der allgemeinen Formel

$$M_aO_b \qquad\qquad (Va)$$

$$M_a(OH)_c \qquad\qquad (Vb),$$

wobei
M ein Metallatom ist, bevorzugt ein Alkali- oder Erdalkalimetallatom, wie Natrium, Kalium, Magnesium oder Calcium
a 1 oder 2,
b 1, 2 oder 3 und
c 1, 2 oder 3 ist,
und Amine der allgemeinen Formel (VI)

$$NR^3R^4R^5 \qquad\qquad (VI),$$

wobei,
$R^3$ gleich R, $R^1$ und $R^2$ sein kann und R, $R^1$ und $R^2$ obige Bedeutung haben,
$R^4$ gleich $R^3$ oder eine Kohlenwasserstoffkette, die ein Si-C gebundenes Siliziumatom trägt, sein kann, und
$R^5$ gleich oder verscheiden von $R^4$ und $R^3$ sein kann.

Weitere geeignete Katalysatoren sind heterogene basische Katalysatoren, wie z. B. basisches Aluminiumoxid oder basische Ionentauscher.

Diese Katalysatoren können beispielsweise in Substanz, in Lösung oder als heterogener Katalysator zugegeben werden. Beispiele für derartige Katalysatoren sind wässrige Natriumoder Kaliumhydroxidlösungen, wässrige Ammoniaklösungen, organische Amine wie Ethylenamin, Diethylenamin, Ethyldiamin, siliciumhaltige Amine wie Aminopropyltrimethoxysilan, Aminopropylaminoethyldimethoxymethylsilan oder etc.

Die Katalysatorzugabe kann zu verschiedenen Zeiten der Synthese erfolgen. Zum einen direkt nach der bevorzugten Zugabe des organischen, nicht mit Wasser mischbaren Lösungsmittels, wie Xylol oder Toluol nach dem Ende des sauren Kondensationsschrittes und noch vor der Phasentrennung. Der Vorteil dabei ist, dass man ein "Eintopfverfahren" vorliegen hat. Weiter wird somit das Abwasser gleichzeitig neutralisiert, so dass dessen Entsorgung wesentlich erleichtert wird. In diesem Fall muss die Menge an basischen Katalysator so eingestellt werden, dass in der wässrigen Flotte mindestens ein pH-Wert von 8 oder höher erreicht wird. (1 Variante)

Eine zweite Möglichkeit ist, dass der basische Kondensationskatalysator nach der Phasentrennung und noch vor der Destillation der Polyorganosiloxanharzlösung zugegeben wird. (2. Variante)

Eine dritte Verfahrensvariante ist, dass die oben beschriebenen Katalysatoren erst nach dem Ausdestillieren, das zum Entfernen niedermolekularer Silane bzw. Siloxane wie dem Hexamethlydisiloxan und Lösungsmittelanteilen wie Isopropanol durchgeführt wird, zur Polyorganosiloxanharzlösung gegeben werden und das Polyorganosiloxanharz anschliessend weiter kondensiert wird. (3. Variante)

Die Kondensationstemperaturen können vorzugsweise von 0°C bis 180°C variieren, bevorzugt von 40 °C bis 160°C und besonders bevorzugt von 60°C bis 150°C betragen.

Die Reaktionsdauer kann vorzugsweise von 24 Stunden bis 15 Minuten variieren.

Die eingesetzten Mengen an Katalysator (bezogen auf organische Phase) liegen vorzugsweise zwischen 5 und 0,01 Gew.-% bei den Verfahrensvarianten 2 und 3, bevorzugt bei 1 bi 0,1 Gew.-%. Bei der Variante 1 (mit Neutralisation) wird die Menge vorzugsweise so gewählt, dass vorzugsweise ein pH-Wert von mindestens 8 in der wässrigen Flotte erreicht wird.

Nach dem Kondensationsschritt kann die Polyorganosiloxanharzlösung nochmals destilliert werden, um z.B. Wasser, Alkohole wie Isopropanol oder niedermolekulare Silane oder Siloxane wie Hexamethyldisiloxan aus der Lösung zu entfernen oder um den gewünschten Festgehalt der Lösung einzustellen.

Die erhaltenen Polyorganosiloxanharze können z. B. durch Abdampfen des Lösungsmittels oder durch Sprühtrocknung isoliert werden.

Die erhaltenen Polyorganosiloxanharze bzw. Polyorganosiloxanharzlösungen können z. B. als "controlled release agent" in der Papierbeschichtung oder in PSA's (Pressure-Sensitive Adhesives) oder in platinvernetzende Kautschuksysteme eingesetzt werden.

Gegenstand der Erfindung sind weiterhin vernetzbare Zusammensetzungen enthaltend

(A) Organosiliciumverbindungen, die Reste mit aliphatischen Kohlenstoff-Kohlenstoff-Mehrfachbindungen aufweisen,

(B) Organosiliciumverbindungen mit Si-gebundenen Wasserstoffatomen

(C) Die Anlagerung von Si-gebundenem Wasserstoff an aliphatische Mehrfachbindung fördernde Katalysatoren und

(D) erfindungsgemäße Polyorganosiloxanharze.

Die erfindungsgemäßen Polyorganosiloxanharze (D) werden in den vernetzbaren Zusammensetzungen vorzugsweise in Mengen von 10 bis 90 Gew.-%, bevorzugt 10 bis 70 Gew.-%, bezogen auf das Gesamtgewicht der Organosiliciumverbindungen (A) und (B), eingesetzt.

Als Organopolysiloxane (A), die Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel VII

$$R_x^6 R_y^7 SiO_{\frac{4-x-y}{2}} \qquad (VII),$$

wobei R$^6$ einen einwertigen, gegebenenfalls substituierten, von aliphatischen Kohlenstoff-Kohlenstoff-Mehrfachbindungen freien Kohlenwasserstoffrest mit 1 bis 18 Kohlenstoffatomen je Rest und

R$^7$ einen einwertigen Kohlenwasserstoffrest mit terminaler, aliphatischer Kohlenstoff-Kohlenstoff-Mehrfachbindung mit 2 bis 8 Kohlenstoffatomen je Rest bedeutet,

x 0, 1, 2 oder 3,

y 0, 1 oder 2

und die Summe x+y 0, 1, 2 oder 3 ist,

mit der Maßgabe, daß durchschnittlich mindestens 2 Reste R$^7$ vorliegen, verwendet.

Bevorzugt als Organosiliciumverbindungen (A) sind Organopolysiloxane der allgemeinen Formel

$$R_g^7 R_{3-g}^6 SiO(SiR_2^6 O)_n (SiR^6 R^7 O)_m SiR_{3-g}^6 R_g^7 \qquad (VIII)$$

wobei R$^6$ und R$^7$ die oben dafür angegebene Bedeutung haben,

g 0, 1 oder 2,

n 0 oder eine ganze Zahl von 1 bis 1500 und

m 0 oder eine ganze Zahl von 1 bis 200 ist,

mit der Maßgabe, daß durchschnittlich mindestens 2 Reste $R^7$, enthalten sind.

Im Rahmen dieser Erfindung soll Formel (VIII) so verstanden werden, daß x Einheiten -(SiR$^6_2$O)- und y Einheiten -(SiR$^6$R$^7$O)-in beliebiger Weise im Organopolysiloxanmolekül verteilt sein können.

Als Organosiliciumverbindungen (A) können auch verzweigte Polymere mit endständigen ω-Alkenylgruppen, bevorzugt Si-gebundene Vinylgruppen, wie sie in WO 97/23548 (incorporated by reference), insbesondere Seite 2, Zeile 13 bis Seite 3, Zeile 18, und WO 98/31727 (incorporated by reference), insbesondere Seite 2, Zeile 33 bis Seite 3, Zeile 35, beschrieben sind, verwendet werden.

Als Organosiliciumverbindungen (A) können auch Siloxancopolymere, wie sie in US-A 5,241,034 (incorporated by reference),insbesondere Spalte 16, Zeile 23 bis Spalte 17, Zeile 35, DE-A 195 22 144 (incorporated by reference), insbesondere Seite 2, Zeile 44 bis 67, DE-A 196 29 053 (incorporated by reference), insbesondere Seite 2, Zeile 51 bis Seite 3, Zeile 29, US-A 5,760,145 (incorporated by reference), insbesondere Spalte 2, Zeile 46 bis Spalte 4, Zeile 23 und DE-A 196 53 167 (incorporated by reference), insbesondere Seite 2, Zeile 21 bis 52, beschrieben sind und die aus Siloxanblöcken und Kohlenwasserstoffblöcken bestehen, beispielsweise Polyadditionsprodukte von 1,2,4-Trivinylcyclohexan und α,ω-Dihydrodimethylpolysiloxanen, verwendet werden.

Als Organosiliciumverbindungen (A) können auch lineare Organopolysiloxane, wie sie in WO 98/42789 (incorporated by reference), insbesondere Seite 3, Zeile 1 bis 28 beschrieben sind und die nicht an beiden Enden je einen aliphatisch ungesättigten Kohlenwasserstoffrest, wie eine Si-gebundene Vinylgruppe, aufweisen sondern an den Enden auch aliphatisch gesättigte Kohlenwasserstoffreste, wie Si-gebundene Methylgruppen aufweisen, verwendet werden.

Die Organopolysiloxane (A) besitzen vorzugsweise eine durchschnittliche Viskosität von 100 bis 10 000 mPa. s bei 25°C.

Beispiele für Kohlenwasserstoffreste $R^6$ sind Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest, Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für Reste $R^7$ sind Alkenylreste, wie der Vinyl-, 5-Hexenyl-, Allyl-, 3-Butenyl- und 4-Pentenylrest; und Alkinylreste, wie der Ethinyl-, Propargyl- und 1-Propinrest.

Als Organosiliciumverbindungen (B), die Si-gebundene Wasserstoffatome aufweisen, werden vorzugsweise lineare, cyclische oder verzweigte Organopolysiloxane aus Einheiten der allgemeinen Formel IX

$$R^6_e H_f SiO_{\frac{4-e-f}{2}} \qquad\qquad (IX),$$

wobei

$R^6$ die oben dafür angegebene Bedeutung hat,

e 0, 1, 2 oder 3,

f 0, 1 oder 2

und die Summe von e+f 0, 1, 2 oder 3 ist,

mit der Maßgabe, daß durchschnittlich mindestens 2 Si-gebundene Wasserstoffatome vorliegen, verwendet.

Bevorzugt werden als Organosiliciumverbindungen (B) Organopolysiloxane der allgemeinen Formel

$$H_h R^6_{3-h} SiO(SiR^6_2 O)_o (SiR^6 HO)_p SiR^6_{3-h} H_h \qquad\qquad (X)$$

wobei $R^6$ die oben dafür angegebene Bedeutung hat,

h 0, 1 oder 2,

o 0 oder eine ganze Zahl von 1 bis 1500 und

p 0 oder eine ganze Zahl von 1 bis 200 ist,

mit der Maßgabe, daß durchschnittlich mindestens 2 Si-gebundene Wasserstoffatome, vorliegen, verwendet.

Im Rahmen dieser Erfindung soll Formel (X) so verstanden werden, daß o Einheiten -(SiR$^6_2$O)- und p Ein-

heiten -(SiR$^6$HO)-in beliebiger Weise im Organopolysiloxanmolekül verteilt sein können.

Beispiele für solche Organopolysiloxane sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan-und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxanund/oder Phenylmethylsiloxaneinheiten.

Als Organosiliciumverbindungen (B) können auch solche wie sie in US-A 5,691,435 (incorporated by reference), insbesondere Spalte 3, Zeile 45 bis Spalte 4, Zeile 29, US-A 5,866,707 (incorporated by reference), insbesondere Spalte 1, Zeile 54 bis Spalte 2, Zeile 65 und DE-A 197 55 151 (incorporated by reference), insbesondere Seite 3, Zeile 32 bis 68, beschrieben sind verwendet werden.

Die Organopolysiloxane (B) besitzen vorzugsweise eine durchschnittliche Viskosität von 10 bis 1 000 mPa. s bei 25 °C.

Organosiliciumverbindung (B) wird vorzugsweise in Mengen von 0,5 bis 3,5, bevorzugt 1,0 bis 3,0 Grammatom Si-gebundenen Wasserstoff je Mol Si-gebundenen Restes mit aliphatischer Kohlenstoff-Kohlenstoff-Mehrfachbindung in der Organosiliciumverbindung (A) und gegebenenfalls in dem Polyorganosiloxanharz (D) eingesetzt

Als die Anlagerung von Si-gebundenem Wasserstoff an aliphatische Mehrfachbindungen fördernde Katalysatoren können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten.

Bei den Katalysatoren (C) handelt es sich vorzugsweise um ein Metall aus der Gruppe der Platinmetalle oder um eine Verbindung oder einen Komplex aus der Gruppe Platinmetalle, wie Platin, Palladium oder Rhodium, bevorzugt um eine Verbindung oder einen Komplex des Platins.

Beispiele für solche Katalysatoren (C) sind metallisches und feinverteiltes Platin, das sich auf Trägern wie Siliciumdioxyd, Aluminiumoxyd oder Aktivkohle befinden kann, Verbindungen oder Komplexe von Platin, wie Platinhalogenide, z. B. $PtCl_4$, $H_2PtCl_6*6H_2O$, $Na_2PtCl_4*4H_2O$, Platin-Olefin-Komplexe, Platin-Alkohol-Komplexe, Platin-Ether-Komplexe, Platin-Aldehyd-Komplexe, Platin-Keton-Komplexe, einschließlich Umsetzungsprodukten aus $H_2PtCl_6*6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbaren anorganisch gebundenem Halogen, Bis-(gammapicolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gammapicolin-Platindichlorid, Cyclopentadien-Platindichlorid sowie Umsetzungsprodukte von Platintetrachlorid mit Olefin und primärem Amin oder sekundärem Amin oder primärem und sekundärem Amin gemäß US-A 42 92 434, wie das Umsetzungsprodukt aus in 1-Octen gelöstem Platintetrachlorid mit sec.-Butylamin, oder Ammonium-Platinkomplexe gemäß EP-B 1 10 370.

Die Katalysatoren (C) werden vorzugsweise in Mengen von 10 bis 1000 Gew.-ppm (Gewichtsteilen je Million Gewichtsteilen), bevorzugt 50 bis 200 Gew.-ppm, jeweils berechnet als elementares Platinmetall und bezogen auf das Gesamtgewicht der Organosiliciumverbindungen (A), (B) und (D), eingesetzt.

Die erfindungsgemäßen Zusammensetzungen können die Anlagerung von Si-gebundenem Wasserstoff an aliphatische Mehrfachbindung bei Raumtemperatur verzögernde Mittel, sogenannte Inhibitoren (E), enthalten.

Als Inhibitoren (E) können auch bei den erfindungsgemäßen Zusammensetzungen alle Inhibitoren verwendet werden, die auch bisher für den gleichen Zweck verwendet werden konnten.

Beispiele für Inhibitoren (E) sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, eine Mischung aus Diallylmaleinat und Vinylacetat, Maleinsäuremonoester, und Inhibitoren wie die Verbindung der Formel

$HC{\equiv}C-C(CH_3)(OH)-CH_2-CH_2-CH=C(CH_3)_2$, käuflich erwerblich unter dem Handelsnamen "Dehydrolinalool" bei der Fa. BASF.

Wird Inhibitor (E) mitverwendet, so wird er zweckmäßig in Mengen von vorzugsweise 0,01 bis 10 Gew.-%, bevorzugt 0,01 bis 3 Gew.-%, bezogen auf das Gesamtgewicht der Organosiliciumverbindungen (A), (B) und (D), eingesetzt.

Die erfindungsgemäßen Zusammensetzungen können organische, mit Wasser nicht mischbare Losungsmitter (F) enthalten.

Beispiele für solche Lösungsmittel (F) sind Benzine, z. B. Alkangemische mit einem Siedebereich von 70°C bis 180°C, n-Heptan, Benzol, Toluol und Xylole, halogenierte Alkane mit 1 bis 6 Kohlenstoffatom(en), wie Methylenchlorid, Trichlorethylen und Perchlorethylen, Ether, wie Di-n-butyl-ether, Ester, wie Ethylacetat, und Ketone, wie Methylethylketon und Cyclohexanon.

Werden organische Lösungsmittel mitverwendet, so werden sie zweckmäßig in Mengen von vorzugsweise 10 bis 90 Gew.-%, bevorzugt 10 bis 70 Gew.-%, bezogen auf das Gewicht der erfindungsgemäßen Polyorganosiloxanharze (D), eingesetzt.

Die erfindungsgemäßen Zusammensetzungen können ungesättigte organische Verbindungen (G) enthalten.

Beispiele für ungesättigte organische Verbindungen (G) sind 1-Alkene mit 10 bis 18 Kohlenstoffatomen, wie 1-Dodecen ($C_{12}$-Olefin), 1-Hexadecen ($C_{16}$-Olefin) und 1-Octadecen ($C_{18}$-Olefin), und Vinylnorbornadien.

Werden ungesättigte organische Verbindungen (G) mitverwendet, so werden sie zweckmäßig in Mengen von vorzugsweise 10 bis 90 Gew.-%, bevorzugt 10 bis 70 Gew.-%, bezogen auf das Gesamtgewicht der erfindungsgemäßen Polyorganosiloxanharze (D), eingesetzt.

Vorzugsweise werden die erfindungsgemäßen Zusammensetzungen mit den Bestandteilen (A), (B), (C), (D) und gegebenenfalls (E), (F) und (G) in Form von Zweikomponenten-Massen bereitgestellt, wobei die Bestandteile (B) und (C) von einander getrennt werden.

Die Reihenfolge beim Vermischen der Bestandteile (A), (B), (C), (D) und gegebenenfalls (E), (F) und (G) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 70°C bis 180°C. Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Gegenstand der Erfindung sind weiterhin Formkörper hergestellt durch Vernetzung der erfindungsgemäßen Zusammensetzungen.

Bei den Formkörper handelt es sich vorzugsweise um Beschichtungen, bevorzugt um klebrige Stoffe abweisende Überzüge.

Gegenstand der Erfindung ist weiterhin ein Verfahren zur Herstellung von Beschichtungen durch Auftragen von erfindungsgemäßen vernetzbaren Zusammensetzungen auf die zu beschichtenden Oberflächen und anschließende Vernetzung der Zusammensetzungen.

Die erfindungsgemäßen vernetzbaren Zusammensetzungen werden bevorzugt zur Herstellung von klebrige Stoffe abweisenden Überzügen, z.B. zur Herstellung von Trennpapieren, verwendet. Klebrige Stoffe abweisende Überzüge werden hergestellt durch Auftragen von erfindungsgemäßen vernetzbaren Zusammensetzungen auf die klebrige Stoffe abweisend zu machenden Oberflächen und anschließende Vernetzung der Zusammensetzungen.

Das Auftragen von den erfindungsgemäßen Zusammensetzungen auf die zu beschichtenden Oberflächen, bevorzugt klebrige Stoffe abweisend zu machenden Oberflächen, kann in beliebiger, für die Herstellung von Beschichtungen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Die Schichtdicke auf den zu beschichtenden Oberflächen beträgt vorzugsweise 0,3 bis 6 µm

Bei den zu beschichtenden Oberflächen, bevorzugt klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststofffolien, z. B. Polyethylenfolien oder Polypropylenfolien, gewebtem und ungewebtem Tuch aus natürlichen oder synthetischen Fasern, keramischen Gegenständen, Glas, einschließlich Glasfasern, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m$^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunstoff, Holz oder Eisen, das für Lagerung und/oder Transport von klebrigen Gütern, wie Klebstoffen, klebrigen Lebensmitteln, z. B. Kuchen, Honig, Bonbons und Fleisch; Bitumen, Asphalt, gefetteten Materialien und Rohgummi, bestimmt ist. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstofffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepreßt. Beim off-line Verfahren richtet sich die Aufwickelgeschwindigkeit nach der Zeit, die notwendig ist, um den Siliconüberzug klebfrei zu machen. Beim in-line Verfahren richtet sich die Verfahrensgeschwindigkeit nach der Zeit, die notwendig ist, um den Siliconüberzug migrationsfrei zu machen. Das off-line Verfahren und das in-line Verfahren kann mit den erfindungsgemäßen Zusammensetzungen bei einer Geschwindigkeit von 50 bis 700 m/min, bevorzugt 100 bis 500 m/min, betrieben werden.

Vorteile der gehärteten Zusammensetzungen enthaltend erfindungsgemäße Polyorganosiloxanharze sind, daß sie auch gegenüber agressiven Klebstoffen, wie agressiven tackifierhaltigen Acrylklebern, wie z.B. bei Etiketten, beständig sind und stabile Trennwerte über lange Zeiträume gewährleisten und ein kontrolliertes Ablösen von z.B. Etiketten von mit den gehärteten Zusammensetzungen beschichteten Substraten ermöglichen.
Weitere Vorteile der vernetzbaren Zusammensetzungen enthaltend erfindungsgemäße Polyorganosiloxanharze sind, daß sie es erlauben den gewünschten Grad der Abhäsivität einzustellen, d.h. durch die gezielt einstellbaren Funktionsdichten und Molekulargewichte effektive Trennkraftabstufungen einstellbar sind und die Zusammensetzungen gut miteinander abmischbar sind. Ein weiterer Vorteil der gehärteten Zusammensetzungen enthaltend erfindungsgemäße Polyorganosiloxanharze ist, daß gegenüber vielen klebrigen Stoffen keine oszillierenden Trennkraftschwankungen (Zippy Release), insbesondere bei hohen Trennkraftwerten, auftreten.
Ein weiterer Vorteil ist, daß hohe Trennkraftwerte auch bei geringen Gehalten an erfindungsgemäßen Polyorganosiloxanharzen in den vernetzbaren Zusammensetzungen erreicht werden, d.h. das erfindungsgemäße Polyorganosiloxanharz besitzt eine hohe Effizienz.
Weitere Vorteile sind, daß die vernetzbaren Zusammensetzungen enthaltend erfindungsgemäße Polyorganosiloxanharze auf vielen Substraten einen guten Verlauf zeigen und daß sie eine hohe Aushärtungsgeschwindigkeit und eine gute Substrathaftung aufweisen.

Beispiele

Allgemeine Synthesevorschrift = Vergleichsbeispiel 1

Zu 203 g 16,5 %-iger Salzsäure werden bei 5°C eine Mischung aus 216 g Wasserglas (WK37/40 von Henkel) und 432 g voll entsalztes Wasser innerhalb von ca. 15 min. zugetropft. Sofort danach werden 111 g Trimethylchlorsilan und 225 g Isopropanol und 120 g Hexamethylsiloxan zugegeben. Anschliessend wird auf Rückflusstemperatur erwärmt und 30 Minuten unter Rückfluss gekocht.
Der Ansatz wird auf 70°C gekühlt, mit 120 g Xylol versetzt und auf Raumtemperatur abgekühlt. Nach der Abtrennung der organischen Phase wird diese bis 135°C Innentemperatur ausgeheizt.
Das nach dieser Synthesevorschrift erhaltenen Harz hat ein M : Q Verhältnis von 0,78 :1 und einen Si-OH Gehalt von ca. 4 Gew.-% und hat eine Restalkoxygehalt von ca. 0,25 mol-%.

Beispiel 1

Jeweils 50 g der nach der allgemeinen Synthesevorschrift erhaltenen xylolischen MQ - Harzlösung werden mit den in Tabelle 1 angegebenen Mengen an basischen Verbindungen versetzt und unter den in Tabelle 1 aufgeführten Reaktionsbedingungen umgesetzt.

Tabelle 1:

| Probe | Katalysator | Menge [Gew. - %] | Reaktionsbedingungen | Desaktivierung | Si-OH [Gew. -%] |
|---|---|---|---|---|---|
| 1a | 50-% wässrige KOH | 0,1 | 1 Stunde bei Rückfluss / Wasserabscheider | Essigsäure | 0,15 |
| 1b | 25-% wässrige Ammoniaklösung | 2 | 1 Stunde bei 80°C / 1 Stunde bei Rückfluss / Wasserabscheider | -- | 0,22 |
| 1c | Ethylendiamin | 0,5 | 1 Stunde bei Rückfluss | Essigsäure | 0,20 |
| 1d | BTAH* | 0,04 | 1 Stunde bei Rückfluss 80°C | 30 min bei 150°C | 0,19 |
| 1e | Alox-B** | 0,1 | 1 Stunde bei Rückfluss 80°C | abfiltrieren | 0,2 |
| Alle erhaltenen Polyorganosiloxanharze sind nahezu Alkoxygruppen frei (Restalkoxygehalt kleiner 0.3 mol-%). | | | | | |

*BTAH = Butyltrimethylammoniumhydrochlorid

**Alox-B = basische Tonerde

Beispiel 2

Beispiel einer Formulierung mit einem erfindungsgemäßen MQ-Harz:
48 Teile einer 50,1%igen Lösung eines MQ-Harzes in Xylol, das nach obigem Beispiel 1, Probe 1a, hergestellt wurde, mit einem M/Q-Verhältnis von 0,73/1 und einer Jodzahl von 16,7 werden mit 76 Teilen eines $\alpha,\omega$-Divinyldimethylpolysiloxans mit einer Viskosität von 200 mPa.s bei 25°C, 4,81 Teilen eines Mischpolymerisates aus Trimethylsiloxan- und Hydrogenmethylsiloxaneinheiten mit einer Viskosität von 24 mPa.s bei 25°C, das 1,6 Gew.-% Si-gebundenen Wasserstoff enthält, und 1 Teil einer 1,1%igen (bezogen auf elementares Platin) Lösung von Divinyltetramethyldisiloxanplatin(0) in einem $\alpha,\omega$-Divinyldimethylpolysiloxans mit einer Viskosität von 1000 mPa.s bei 25°C gemischt. Die Weiterverarbeitung der Formulierung erfolgt innerhalb von 15 Minuten.

Beispiel 3

Beispiel einer Formulierung mit einem erfindungsgemäßen MQ-Harz:
35 Teile einer 74,8%igen Lösung eines MQ-Harzes in Xylol, das nach obigem Beispiel 1, Probe 1b hergestellt wurde, mit einem M/Q-Verhältnis von 0,76/1 und einer Jodzahl von 19,9 werden mit 65 Teilen eines $\alpha,\omega$-Divinyldimethylpolysiloxans mit einer Viskosität von 200 mPa.s bei 25°C, 4,92 Teilen eines Mischpolymerisates aus Trimethylsiloxan- und Hydrogenmethylsiloxaneinheiten mit einer Viskosität von 24 mPa.s bei 25°C, das 1,6 Gew.-% Si-gebundenen Wasserstoff enthält, und 1 Teil einer 1,1%igen (bezogen auf elementares Platin) Lösung von Divinyltetramethyldisiloxanplatin(0) in einem $\alpha,\omega$-Divinyldimethylpolysiloxans mit einer Viskosität von 1000 mPa.s bei 25°C gemischt. Die Weiterverarbeitung der Formulierung erfolgt innerhalb von 15 Minuten.

Vergleichsbeispiel 2

Die Arbeitsweise von Beispiel 2 wird wiederholt mit der Abänderung, daß anstelle des erfindungsgemäßen MQ-Harzes das nach Vergleichsbeispiel 1 hergestellte MQ-Siliconharz verwendet wurde.

Beispiel 4

Trennkraftstabilitätsbestimmung:
Mit einem Glasstab wird die nach Beispiel 2 bzw 3 hergestellte Formulierung bzw zum Vergleich die nach Vergleichsbeispiel 2 hergestellte Formulierung mit einer Schichtdicke von ca. 2g/m$^2$ auf einem Papier Larice 325 der Firma Bosso aufgetragen. Die Aushärtung erfolgt innerhalb von 20 Sekunden bei 150°C. Nach 30 Minuten wird mit dem Kleber RP 51 der Fa. Raflatac beklebt. Zur Bestimmung der Trennkraft wird der Kleber vom Laminat gezogen. Zur Überprüfung der Langzeitreleasestabilität werden die beklebten Laminate bei 90°C mit einem Druck von 70g/cm$^2$ gelagert und der Release bis zu drei Wochen überprüft. Die Ergebnisse sind in Tabelle 2 zusammengefaßt.

Tabelle 2:

| | Releasewerte [Lagerungszeit/Lagerungstemperatur] | | | | | |
|---|---|---|---|---|---|---|
| | 20h/70°C | 20h/90°C | 3d/90°C | 7d/90°C | 14d/90°C | 21d/90°C |
| V2 | 8,7 | 24 | 74,5 | 101,9 | 119,8 | 120,1 |
| B2 | 6,7 | 7,7 | 10,7 | 11,1 | 13,8 | 14,7 |
| B3 | 6,3 | 7,4 | 9,8 | 13,9 | 13,0 | 13,1 |
| V2=Vergleichsbeispiel2 B2=Beispiel 2 B3=Beispiel 3 | | | | | | |

**Patentansprüche**

1. Polyorganosiloxanharz auf der Basis von Wasserglas, **dadurch gekennzeichnet, daß** das Polyorganosiloxanharz in einem Nachkondensationsschritt mit einer Base nachbehandelt worden ist.

2. Polyorganosiloxanharz nach Anspruch 1 , **dadurch gekennzeichnet, daß** es M und Q Einheiten enthält.

3. Polyorganosiloxanharz nach Anspruch 2, **dadurch gekennzeichnet, daß** das Verhältnis M : Q Einheiten 0,4 : 1 bis 1,5 : 1 beträgt.

4. Polyorganosiloxanharz nach Anspruch 2, **dadurch gekennzeichnet, daß** es zusätzlich T Einheiten enthält.

5. Polyorganosiloxanharz nach Anspruch 2 oder 4, **dadurch gekennzeichnet, daß** es zusätzlich D Einheiten enthält.

6. Polyorganosiloxanharz nach Anspruch 4 und 5 **dadurch gekennzeichnet, daß** der Anteil von D beziehungsweise T Einheiten relativ zu Q-Einheiten maximal 0,5 : 1 ist.

7. Polyorganosiloxanharz nach Anspruch 1, **dadurch gekennzeichnet, daß** der Gehalt an Si-gebundenen Hydroxygruppen kleiner 0,5 Gew.% ist.

8. Polyorganosiloxanharz nach Anspruch 1, **dadurch gekennzeichnet, daß** der Gehalt an Si-gebundenen Alkoxygruppen kleiner 1 Mol % ist.

9. Verfahren zur Herstellung von Polyorganosiloxanharz auf der Basis von Wasserglas,
wobei Organosiliciumverbindungen ausgewählt aus der Gruppe der Silane $R'_nSi\,X_{4-n}$,
Siloxane $R'_nSiO_{4-n/2}$
und Mischungen beider,
wobei R' gleich oder verschieden sein kann und
ein einwertiger, linearer oder cyclischer Kohlenwasserstoffrest mit 1 bis 18 Kohlenstoffatomen je Rest ist, der gegebenenfalls noch mit Halogenatomen substituiert sein kann, oder dessen Kohlenstoffkette noch durch Heteroatome wie Stickstoff, Sauerstoff oder Schwefel unterbrochen sein kann
oder ein Wasserstoffatom ist,
oder ein einwertiger Kohlenwasserstoffrest mit 1 bis 18 Kohlenstoffatomen je Rest, der zusätzliche funktionelle Gruppen tragen kann,
oder -OR" bedeutet, wobei R" einen einwertigen gegebenenfalls substituierten Kohlenwasserstoffrest mit 1 bis 8 Kohlenstoffatom(en) bedeutet,
wobei zumindest 50% der gesamten Anzahl an R'-Gruppen Alkylgruppen sind,
X ein Halogenatom, wie Chlor oder Brom, oder eine Alkoxygruppe bedeutet und
n eine ganze Zahl von 1 bis 3 ist,

mit einem Kieselsäurehydrosol
umgesetzt wird,
mit der Maßgabe, dass wenn die Organosiliciumverbindung keine Chlorsilane enthält, das Kieselsäurehydrosol Säure enthält, so dass es einen pH-Wert von weniger als 5 aufweist, **dadurch gekennzeichnet, daß** das Polyorganosiloxanharz in einem Nachkondensationsschritt mit einer Base nachbehandelt wird.

10. Vernetzbare Zusammensetzungen enthaltend

(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren und
(D) Polyorganosiloxanharze nach einem der Ansprüche 1 bis 8.

11. Formkörper hergestellt durch Vernetzung der Zusammensetzungen gemäß Anspruch 10.

12. Formkörper gemäß Anspruch 11, **dadurch gekennzeichnet, daß** es sich um Beschichtungen handelt.

13. Formkörper gemäß Anspruch 11, **dadurch gekennzeichnet, daß** es sich um klebrige Stoffe abweisende Überzüge handelt.

14. Verfahren zur Herstellung von Beschichtungen durch Auftragen von vernetzbaren Zusammensetzungen gemäß Anspruch 10 auf die zu beschichtenden Oberflächen und anschließende Vernetzung der Zusammensetzungen.

15. Verfahren zur Herstellung von klebrige Stoffe abweisende Überzüge durch Auftragen von vernetzbaren Zusammensetzungen gemäß Anspruch 10 auf die klebrige Stoffe abweisend zu machenden Oberflächen und anschließende Vernetzung der Zusammensetzungen.

## Claims

1. Polyorganosiloxane resin based on waterglass, **characterized in that** said resin has been aftertreated with a base in a post-condensation step.

2. Polyorganosiloxane resin according to Claim 1, **characterized in that** it comprises M and Q units.

3. Polyorganosiloxane resin according to Claim 2, **characterized in that** the ratio of M to Q units is from 0.4:1 to 1.5:1.

4. Polyorganosiloxane resin according to Claim 2, **characterized in that** it further comprises T units.

5. Polyorganosiloxane resin according to Claim 2 or 4, **characterized in that** it further comprises D units.

6. Polyorganosiloxane resin according to either of Claims 4 and 5, **characterized in that** the proportion of D and/or T units relative to Q units is not more than 0.5:1.

7. Polyorganosiloxane resin according to Claim 1, **characterized in that** it contains less than 0.5% by weight of Si-bonded hydroxyl groups.

8. Polyorganosiloxane resin according to Claim 1, **characterized in that** it contains less than 1 mol% of Si-bonded alkoxy groups.

9. Process for preparing a polyorganosiloxane resin based on waterglass,
by reacting organosilicon compounds selected from the group consisting of silanes $R'_n Si X_{4-n}$,
siloxanes $R'_n SiO_{4-n/2}$
and mixtures of the two,
in which R' can be identical or different and is a monovalent, linear or cyclic hydrocarbon radical having from 1 to 18 carbon atoms per radical, which may where appropriate also be substituted by halogen atoms, or whose carbon chain may also be interrupted by heteroatoms such as nitrogen, oxygen or sulphur

or is a hydrogen atom,

or denotes a monovalent hydrocarbon radical having from 1 to 18 carbon atoms per radical, which may carry additional functional groups,

or -OR", where R" denotes a monovalent, unsubstituted or substituted hydrocarbon radical having from 1 to 8 carbon atoms,

at least 50% of the total number of R' groups being alkyl groups,

X denotes a halogen atom, such as chlorine or bromine, or an alkoxy group and

n is an integer from 1 to 3,

with a silica hydrosol,

with the proviso that, if the organosilicon compound includes no chlorosilanes, the silica hydrosol contains acid so as to have a pH of less than 5, **characterized in that** it comprises after-treating the polyorganosiloxane resin with a base in a post-condensation step.

10. Crosslinkable compositions comprising

(A) organosilicon compounds having radicals containing aliphatic carbon-carbon multiple bonds,
(B) organosilicon compounds containing Si-bonded hydrogen atoms,
(C) catalysts which promote the addition of Si-bonded hydrogen onto aliphatic multiple bond, and
(D) polyorganosiloxane resins according to any of Claims 1 to 8.

11. Shaped articles produced by crosslinking the compositions according to Claim 10.

12. Shaped articles according to Claim 11,
**characterized in that** they are coatings.

13. Shaped articles according to Claim 11, **characterized in that** they are coatings that repel tacky substances.

14. Process for producing coatings by applying crosslinkable compositions according to Claim 10 to the surfaces that are to be coated and then crosslinking the compositions.

15. Process for producing coatings that repel tacky substances, by applying crosslinkable compositions according to Claim 10 to the surfaces that are to be made repellent to tacky substances and then crosslinking the compositions.

**Revendications**

1. Résine de polyorganosiloxane à base de verre soluble, **caractérisée en ce que** la résine de polyorganopolysiloxane a été post-traitée avec une base dans une étape de post-condensation.

2. Résine de polyorganosiloxane selon la revendication 1, **caractérisée en ce qu'**elle renferme des motifs M et Q.

3. Résine de polyorganosiloxane selon la revendication 2, **caractérisée en ce que** le rapport des motifs M : Q est de 0,4 : 1 à 1,5 : 1.

4. Résine de polyorganosiloxane selon la revendication 2, **caractérisée en ce qu'**elle renferme en outre des motifs T.

5. Résine de polyorganosiloxane selon la revendication 2 ou 4, **caractérisée en ce qu'**elle renferme en outre des motifs D.

6. Résine de polyorganosiloxane selon les revendications 4 et 5, **caractérisée en ce que** la proportion de motifs D ou T par rapport aux motifs Q est d'au plus 0,5 : 1.

7. Résine de polyorganosiloxane selon la revendication 1, **caractérisée en ce que** la teneur en groupes hydroxy liés au silicium est inférieure à 0,5 % en poids.

8. Résine de polyorganosiloxane selon la revendication 1, **caractérisée en ce que** la teneur en groupes alcoxy liés au silicium est inférieure à 1 % en moles.

9. Procédé de préparation d'une résine de polyorganosiloxane à base de verre soluble, dans lequel des composés organosiliciés choisis parmi le groupe constitué de silanes $R'_n Si X_{4-n}$, de siloxanes $R'_n SiO_{4-n/2}$ et de leurs mélanges, où R' peut être identique ou différent et représente un radical hydrocarboné monovalent, linéaire ou cyclique, ayant de 1 à 18 atomes de carbone par radical, qui peut être éventuellement également substitué par des atomes d'halogène, ou dont la chaîne carbonée peut être également interrompue par des hétéroatomes tels qu'un azote, un oxygène ou un soufre,
ou un atome d'hydrogène,
ou un radical hydrocarboné monovalent ayant de 1 à 18 atomes de carbone par radical, qui peut porter des groupes fonctionnels supplémentaires,
ou -OR" où R" représente un radical hydrocarboné monovalent, éventuellement substitué, ayant de 1 à 8 atomes de carbone,
où au moins 50 % du nombre total de groupes R' sont des groupes alkyle,
X représente un atome d'halogène, tel qu'un chlore ou un brome, ou un groupe alcoxy et
n représente un entier de 1 à 3,
sont mis à réagir avec un hydrosol d'acide silicique,
à condition que si le composé organosilicié ne renferme aucun chlorosilane, l'hydrosol d'acide silicique renferme un acide de telle sorte qu'il présente un pH inférieur à 5,
**caractérisé en ce que** la résine de polyorganosiloxane est post-traitée avec une base dans une étape de post-condensation.

10. Compositions réticulables comprenant

(A) des composés organosiliciés renfermant des radicaux ayant des liaisons multiples carbone-carbone aliphatiques,
(B) des composés organosiliciés ayant des atomes d'hydrogène liés au silicium,
(C) des catalyseurs favorisant l'addition d'hydrogène lié au silicium sur une liaison multiple aliphatique, et
(D) des résines de polyorganosiloxanes selon l'une quelconque des revendications 1 à 8.

11. Articles moulés produits par réticulation des compositions selon la revendication 10.

12. Articles moulés selon la revendication 11, **caractérisés en ce qu'**il s'agit de revêtements.

13. Articles moulés selon la revendication 11, **caractérisés en ce qu'**il s'agit de revêtements repoussant les substances collantes.

14. Procédé de production de revêtements par application de compositions réticulables selon la revendication 10 sur les surfaces à revêtir et par réticulation ultérieure des compositions.

15. Procédé de production de revêtements repoussant les substances collantes par application de compositions réticulables selon la revendication 10 sur les surfaces destinées à repousser les substances collantes et par réticulation ultérieure des compositions.